# EUROPÄISCHE PATENTANMELDUNG

(11) **EP 2 583 806 A1**
(43) Veröffentlichungstag der Anmeldung: **24.04.2013**
(21) Anmeldenummer: 12005523.1
(22) Anmeldetag: 30.07.2012
(51) Int. Cl.: B29C 33/10, B29C 37/00, B29C 43/36, B29C 45/14, B29C 45/34

(54) **Verfahren und Vorrichtung zur Herstellung von flächigen Kunststoff-Bauteilen**

(30) Priorität: 17.10.2011 DE 102011116241
(71) Anmelder: Schleicher, Ludwig, 92690 Pressath (DE); Baumann, Frank, 76684 Östringen (DE); Richter, Michael, 69126 Heidelberg (DE)
(72) Erfinder: Schleicher, Ludwig, 92690 Pressath (DE); Baumann, Frank, 76684 Östringen (DE); Richter, Michael, 69126 Heidelberg (DE)

(57) **Zusammenfassung**

Es wird ein Verfahren und eine Vorrichtung zur Herstellung von flächigen Kunststoff-Bauteilen beschrieben, wobei in einen durch ein Formoberteil (10) und ein Formunterteil (12) definierten, ebenen, relativ großflächigen spaltförmigen Formhohlraum (16) mindestens eine Lage eines Einlagematerials eingebracht und der Formhohlraum (16) anschließend dicht verschlossen wird. In den Formhohlraum (16) wird dann durch mindestens einen in den Formhohlraum (16) einmündenden Angußkanal ein lichtechtes, transparentes Kunststoffmaterial unter Druck eingebracht, so dass sich nach dem Aushärten und dem Öffnen des Formhohlraumes (16) ein formstabiles Halbzeug ergibt. Dieses zweidimensionale Halbzeug kann dann unter erhöhtem Druck und bei erhöhter Temperatur zu einem dreidimensionalen Endprodukt umgeformt werden.

## Beschreibung

Die Erfindung betrifft ein Verfahren zur Herstellung von flächigen Kunststoff-Bauteilen, sowie eine Vorrichtung zur Durchführung dieses Verfahrens, mit einem Formoberteil und einem Formunterteil, die einen ebenen, relativ großflächigen, spaltförmigen Formhohlraum definieren.

Bei dem flächigen Kunststoff-Bauteil kann es sich um ein Halbzeug für ein Funktions-Bauteil, wie bspw. ein Fahrzeug-Karosserieteil, ein Fahrzeug-Innenverkleidungsteil o.dgl. handeln. Bei dem Kunststoff-Bauteil kann es sich z.B. auch um ein Halbzeug für ein Dekor-Bauteil wie die Abdeckung einer Beleuchtungseinrichtung o.dgl. handeln. Desgleichen ist es möglich, dass es sich bei dem Kunststoff-Bauteil um ein Kaschier-Bauteil handelt, das mit einem Basis- d.h. Grundbauteil bspw. in einem Auswechsel-System kombinierbar ist, wie es z.B. bei einem Fahrzeug-Innenverkleidungsteil zur Anwendung gelangen und unter Recycling-Gesichtspunkten vorteilhaft sein kann.

Es versteht sich, dass die oben genannten Anwendungen die Erfindung nicht beschränken, sondern nur einige Anwendungsbeispiele einer Vielzahl weiterer Anwendungen verdeutlichen.

Der Erfindung liegt die Aufgabe zugrunde, ein Verfahren der eingangs genannten Art und eine dafür vorgesehene Vorrichtung zu schaffen, wobei es einfach und in großen Stückzahlen preisgünstig möglich ist, ein blechartiges formstabiles Halbzeug zu realisieren, das - ähnlich wie ein Metallblech - wunschgemäß preisgünstig zu einem entsprechenden Bauteil umformbar ist.

Diese Aufgabe wird verfahrensgemäß durch die Merkmale des Anspruches 1, d.h. dadurch gelöst, dass in einen durch ein Formoberteil und ein Formunterteil definierten ebenen, relativ großflächigen, spaltförmigen Formhohlraum mindestens eine Lage eines Einlagematerials eingebracht und der Formhohlraum anschließend dicht verschlossen wird, und dass in den Formhohlraum durch mindestens einen in den Formhohlraum einmündenden Angußkanal ein lichtechtes, transparentes Kunststoffmaterial eingebracht wird, so dass sich nach dem Aushärten und dem Öffnen des Formhohlraumes ein formstabiles Kunststoff-Halbzeug ergibt. Dieses Halbzeug ist in vorteilhafter Weise bspw. wie ein Metallblech zu einem Endprodukt weiter verarbeitbar.

Beim Einbringen des Kunststoffmaterials in den Formhohlraum wird die Fließgeschwindigkeit des Kunststoffmaterials derartig gewählt, dass keine Entmischungen o.dgl. entstehen. Desgleichen wird die Viskosität des Kunststoffmaterials passend gewählt. Bspw. beträgt die Temperatur des Kunststoffmaterials mindestens 58°C, wenn es sich bei dem Kunststoffmaterial um ein Polyurethanmaterial handelt, um eine entsprechend hohe Mischgüte zu erzielen. Die Temperatur der Vorrichtung, d.h. des den spaltförmigen Formhohlraum definierenden Formoberteils und des Formunterteils sollte in diesem Falle bspw. mindestens 70 bis 75°C betragen; sie ist auch von dem jeweils ggf. zur Anwendung gelangenden Trennmittel abhängig. Die Formstandzeit ist von der Reaktivität des Kunststoffmaterials abhängig, sie beträgt bspw. 360 sec, wenn es sich bei dem Kunststoffmaterial um ein Polyurethanmaterial handelt. Die offene Zeit, d.h. die Startzeit des Kunststoffmaterials beträgt bei einem Polyurethanmaterial z.B. 95 sec. Selbstverständlich sind auch andere Parameterwerte bezüglich der Zeit und der Temperatur möglich; die angegebenen Werte sollen nur der Verständlichkeit dienen.

Das Kunststoffmaterial kann wunschgemäß mittels Katalysatoren auch schneller gemacht werden, d.h. die Startzeit entsprechend reduziert werden.

Zweckmäßig kann es sein, wenn in den spaltförmigen Formhohlraum mindestens zwei Lagen eines eine definierte Faserorientierung aufweisenden Einlagematerials eingebracht werden, wobei die Faserorientierungen der Einlagematerial-Lagen sich unter einem bestimmten Winkel überkreuzen. Dieser Winkel kann bspw. 90° betragen. Bei dem Faser-Einlagematerial kann es sich bspw. um ein Kohlefaser (CFK) - Material, um ein gitterartiges Einlagematerial, um ein Gewebe o.dgl. handeln.

Zweckmäßig kann es sein, wenn der Formhohlraum evakuiert wird, bevor das Kunststoffmaterial in den Formhohlraum eingebracht wird. Auf diese Weise ist ein Überfüllen des Formhohlraums vermeidbar, wobei gleichzeitig unerwünschte Lufteinschlüsse, Störungen in "Eisblumen"-Gestalt o.dgl. vermieden werden.

Erfindungsgemäß wird im Formhohlraum ein blechartiges, formstabiles Halbzeug hergestellt, das zumindest an einer seiner beiden voneinander abgewandten Hauptflächen eine spiegelglatte Sichtseite besitzen kann. Anstelle einer spiegelglatten Sichtseite ist - bei entsprechender Gestaltung des Formhohlraumes - auch eine strukturierte Sichtseite realisierbar.

Als vorteilhaft hat es sich erweisen, wenn ein Kunststoffmaterial verwendet wird, das mindestens einen UV-Stabilisator und/oder mindestens einen die Startzeit beschleunigenden Katalysator enthält - wie bereits weiter oben erwähnt worden ist.

Das zweidimensionale formstabile, blechartige Halbzeug kann unter erhöhtem Druck und bei erhöhter Temperatur in vorteilhafter Weise zu einem dreidimensionalen Endprodukt - ähnlich der üblichen Weiterverarbeitung von Metallblechen - umgeformt werden.

Die der Erfindung zugrunde liegende Aufgabe wird vorrichtungsgemäß durch die Merkmale des Anspruches 6, d.h. dadurch gelöst, dass das Formoberteil oder das Formunterteil in einem Abstand vom Rand des Formhohlraumes mit einer umlaufenden Nut für eine Dichtung und im Zwischenbereich zwischen dem Rand des Formhohlraums und der Nut für die Dichtung mit mindestens einer Entlüftungsbohne ausgebildet ist.

Vorteilhaft ist es, wenn in der umlaufenden Nut eine aufblasbare Dichtung vorgesehen ist. Anstelle einer aufblasbaren Dichtung ist es bspw. auch möglich, in der Nut z.B. eine Silikonschnur o.dgl. anzuordnen. Die besagte Dichtungsschnur wird zweckmäßiger Weise unter Zug in die Dichtungs-Nut eingebracht.

Die ein Formoberteil und ein Formunterteil aufweisende Vorrichtung ist zweckmäßigerweise an einer Schwenkeinrichtung angebracht, die mittels einer zugehörigen Antriebseinrichtung bspw. ≤ 90° schwenkbar ist. Bei der Antreibseinrichtung handelt es sich z.B. um eine Kolben-Zylindereinheit. Mit Hilfe der Schwenkeinrichtung ist die Qualität der mit der erfindungsgemäßen Vorrichtung hergestellten Bauteile erheblich verbesserbar.

Der den Formhohlraum begrenzende Rand kann mit einer Tauchkante gestaltet sein, durch welche der Spalt beim Öffnen des Werkzeugs, d.h. beim Auseinanderbewegen von Formoberteil und Formunterteil dem Winkel der Tauchkante entsprechend reduziert ist. Beträgt der Winkel der Tauchkante z.B. 50°, so beträgt der entsprechende Öffnungsspalt an der Tauchkante cosinus 50° (=0,66). Eine solche Tauchkante ergibt folglich im Vergleich zu einer herkömmlichen Blockkante eine Verbesserung der Abdichteigenschaften. Eine solche Tauchkante weist auch bezüglich eines möglichen Material-Austriebs Vorteile auf, weil seine Wanddicke entsprechend reduziert ist.

In den Zwischenbereich zwischen dem Rand des Formhohlraumes und der Nut für die Dichtung kann mindestens eine Vakuumventileinheit einmünden. Die mindestens eine Vakuumventileinheit kann im Bereich zwischen der Nut für die Dichtung und der mindestens einen Entlüftungsbohne vorgesehen sein. Mindestes eine Entlüftungsbohne kann auch mit einem Drucksensor kombiniert sein, um an der entsprechenden Stelle eine Druckmessung vornehmen zu können.

Weitere Einzelheiten, Merkmale und Vorteile ergeben sich aus der nachfolgenden Beschreibung in Verbindung mit der anliegenden Zeichnung.

Es zeigen:
Figur 1 abschnittweise einen Schnitt durch die erfindungsgemäße Vorrichtung zur Durchführung des erfindungsgemäßen Verfahrens, und
Figur 2 abschnittweise eine Ansicht des Formoberteils der Vorrichtung zur Herstellung flächiger formstabiler Bauteile aus lichtechtem Polyurethanmaterial.

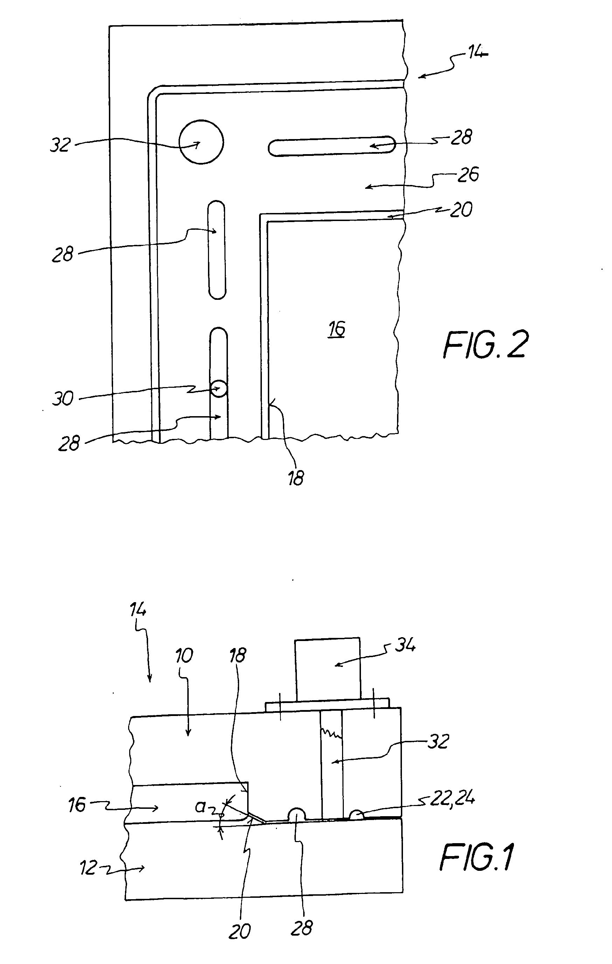

Figur 1 zeigt abschnittweise ein Formoberteil 10 und ein Formunterteil 12 einer Ausführungsform der Vorrichtung 14 zur Herstellung von flächigen, formstabilen Bauteilen bzw. Bauteil-Halbzeugen aus transparentem Polyurethanmaterial. Das Formoberteil 10 und das Formunterteil 12 definieren einen ebenen, relativ großflächigen, spaltförmigen Formhohlraum 16, der durch einen umlaufenden Rand 18 begrenzt ist. Der Rand 18 ist mit einem Tauchrand 20 ausgebildet, der einen Winkel "a" aufweist.

Wie auch aus Figur 2 ersichtlich ist, ist das Formoberteil 10 der Vorrichtung 14 in einem Abstand vom Rand 18 des Formhohlraumes 16 mit einer umlaufenden Nut 22 ausgebildet, die für eine Dichtung 24 vorgesehen ist. Die Dichtung 24 kann von einem Dichtungsring oder von einer aufblasbaren ringförmigen Dichtung gebildet sein.

Im Zwischenbereich 26 zwischen dem Rand 18 des Formhohlraumes 16 und der umlaufenden Nut 22 für die Dichtung 24 sind Entlüftungsbohnen 28 ausgebildet. In eine Entlüftungsbohne 18 mündet ein Drucksensor 30 ein. In den Zwischenbereich 26 mündet mindestens eine Vakuumventileinheit 32 ein. Die Vakuumventileinheit 32 ist mit einem Pneumatikzylinder kombiniert, der zur Betätigung, d.h. zum Antrieb der Vakuumventileinrichtung 32 vorgesehen ist.

Gleiche Einzelheiten sind in den Figuren jeweils mit denselben Bezugsziffern bezeichnet.

### Bezugsziffernliste:

- 10: Formoberteil (von 14)
- 12: Formunterteil (von 14)
- 14: Vorrichtung
- 16: Formhohlraum (von 14 zwischen 10 und 12)
- 18: umlaufender Rand (von 16)
- 20: Tauchrand (von 18)
- 22: umlaufende Nut (in 10 oder 12 für 24)
- 24: Dichtung (in 22)
- 26: Zwischenbereich (zwischen 18 und 22)
- 28: Entlüftungsbohne (in 10 oder 12)
- 30: Drucksensor (bei 28)
- 32: Vakuumventileinheit (bei 26)
- 34: Pneumatikzylinder (für 32)

## Patentansprüche

1. Verfahren zur Herstellung von flächigen Kunststoff-Bauteilen,
**dadurch gekennzeichnet,**
**dass** in einen durch ein Formoberteil und ein Formunterteil definierten, ebenen, relativ großflächigen, spaltförmigen Formhohlraum mindestens eine Lage eines Einlagematerials eingebracht und der Formhohlraum anschließend dicht verschlossen wird, und dass in den Formhohlraum durch mindestens einen in den Formhohlraum einmündenden Angußkanal ein lichtechtes, transparentes Kunststoffmaterial eingebracht wird, so dass sich nach dem Aushärten und dem Öffnen des Formhohlraumes ein formstabiles Halbzeug ergibt.

2. Verfahren nach Anspruch 1,
**dadurch gekennzeichnet,**
**dass** in den spaltförmigen Formhohlraum mindestens zwei Lagen eines eine definierte Faserorientierung aufweisenden Einlagematerials eingebracht werden, wobei die Faserorientierungen der Einlagematerial-Lagen sich unter einem bestimmten Winkel überkreuzen.

3. Verfahren nach Anspruch 1,
**dadurch gekennzeichnet,**
**dass** im Formhohlraum ein blechartiges, formstabiles Halbzeug hergestellt wird, das zumindest an einer seiner beiden voneinander abgewandten Hauptflächen eine spiegelglatte Sichtseite bildet.

4. Verfahren nach Anspruch 1,
**dadurch gekennzeichnet,**
**dass** ein Kunststoffmaterial verwendet wird, das mindestens einen UV-Stabilisator und/oder mindestens einen die Startzeit beschleunigenden Katalysator enthält.

5. Verfahren nach einem der Ansprüche 1 bis 4,
**dadurch gekennzeichnet,**
**dass** das formstabile, zweidimensionale blechartige Halbzeug unter erhöhtem Druck und bei erhöhter Temperatur zu einem dreidimensionalen Endprodukt umgeformt wird.

6. Vorrichtung zur Durchführung des Verfahrens nach einem der vorhergehenden Ansprüche zur Herstellung von flächigen formstabilen Kunststoff-Bauteilen, mit einem Formoberteil (10) und einem Formunterteil (12), die einen ebenen, relativ großflächigen, spaltförmigen Formhohlraum (16) definieren,
**dadurch gekennzeichnet,**
**dass** das Formoberteil (10) oder das Formunterteil (12) in einem Abstand vom Rand (18) des Formhohlraumes (16) mit einer umlaufenden Nut (22) für eine Dichtung (24) und im Zwischenbereich (26) zwischen dem Rand (18) des Formhohlraumes (16) und der Nut (22) für die Dichtung (24) mit mindestens einer Entlüftungsbohne (28) ausgebildet ist.

7. Vorrichtung nach Anspruch 6,
**dadurch gekennzeichnet,**
**dass** in der umlaufenden Nut (22) eine aufblasbare Dichtung (24) vorgesehen ist.
